# EUROPÄISCHE PATENTANMELDUNG

(11) **EP 0 640 455 A1**
(43) Veröffentlichungstag der Anmeldung: **01.03.1995**
(21) Anmeldenummer: 93117759.6
(22) Anmeldetag: 03.11.1993
(51) Int. Cl.: B29C 35/08, B29C 51/42

(54) **Heizung für Vakuumformmaschinen**

(30) Priorität: 27.08.1993 DE 4328854
(71) Anmelder: MASCHINENFABRIK GEORG GEISS, D-96145 Sesslach (DE)
(72) Erfinder: Geiss, Manfred, Dipl.-ing., D-96145 Sesslach (DE)
(74) Vertreter: Metzler, Jürgen, Dipl.-Ing.

(57) **Zusammenfassung**

Es handelt sich um eine Heizung für Vakuumformmaschinen zum Plastifizieren der zu verformenden thermoplastischen Kunststoffplatten bzw. -folien. Die Heizung, und zwar die Oberund/oder die Unterheizung, ist mit Heizstrahlern (2) bestückt, die als kurzwellige Infrarotstrahler mit einem Abstrahlungsmaximum im Bereich von Wellenlängen kleiner als 2 µm ausgebildet sind (λ < 2 µm). Zweckmäßigerweise sind die Infrarotstrahler als Halogenlampen ausgebildet. Mit diesen Strahlern ergibt sich eine größere Eindringtiefe in die Oberfläche der Kunststoffplatten. Ein Vorheizen ist aufgrund der Trägheitsarmut derartiger Strahler nicht notwendig.

## Beschreibung

Die Erfindung betrifft die Unter- und/oder Oberheizung einer Vakuumformmaschine zum Plastifizieren der zu verformenden thermoplastischen Kunststoffplatten bzw. -folien.

Mit Vakuumformmaschinen werden Formteile aller Art aus Kunststoff hergestellt. Dieser Kunststoff, ein Thermoplast, wird der Vakuumformmaschine in Form von Platten oder Folien zugeführt, wobei diese vor dem Verformen zunächst plastifiziert oder zumindest teilplastifiziert werden müssen. Zu diesem Zweck besitzt die Vakuumformmaschine eine einfahrbare Heizung, die in aller Regel aus einer Oberheizung und einer Unterheizung besteht, so daß die Kunststoffplatten beidseitig beheizt werden können. Als Heizstrahler sind bei diesen Heizungen praktisch nur noch Infrarotstrahler eingesetzt, die im mittelwelligen und langwelligen Bereich arbeiten. Dabei liegt das Abstrahlungsmaximum der mittelwelligen Strahler bei einer Wellenlänge λ = 2 µm oder höher, während das Abstrahlungsmaximum der langwelligen Infrarotstrahler im Bereich der Wellenlänge λ = 7 bis 10 µm liegt. Beide Strahlersysteme sind für die Beheizung thermoplastischer Kunststoffe geeignet, haben jedoch auch gravierende Nachteile. Zum einen haben derartige Strahler eine erhebliche Trägheit. Dies führt dazu, daß die Strahler vorgeheizt werden müssen und bei taktweise arbeitenden Maschinen auch bei Nichtbenutzung eingeschaltet bleiben müssen, was neben erheblichen Energiekosten auch zu erhöhten thermischen Belastungen der Maschinenteile führt. Nachteilig ist auch, daß alle Regelvorgänge mit langen Einschwingzeiten behaftet sind. Nachteilig ist weiterhin, daß Strahlung der Wellenlänge über 2 µm aufgrund der schlechten Transmission nur wenig tief in die Oberfläche der zu plastifizierenden Kunststoffplatten eindringt. Damit ist die Flächenleistung begrenzt, da Kunststoffoberflächen aufschmelzen oder gar verbrennen, bevor die Mittelschicht der thermoplastischen Platte aufgeheizt ist. Diese Schwierigkeiten vergrößern sich je größer die Dicke der zu plastifizierenden Platten ist.

Die Aufgabe der Erfindung besteht deshalb darin, die Unter- und/oder Oberheizung einer Vakuumformmaschine insoweit zu verbessern, daß die in ihr angeordneten Heizstrahler eine vergrößerte Eindringtiefe ihrer Strahlung in die Kunststoffplatten besitzen, so daß eine gleichmäßige Plastifizierung über die Tiefe, d.h. Plattendicke, möglich ist, daß die Heizung trägheitslos oder nahezu trägheitslos arbeitet, so daß ein Vorheizen entfällt und die Heizung nur dann in Betrieb gesetzt werden muß, wenn sie tatsächlich gebraucht wird, und daß ein Nachheizen praktisch vernachlässigbar ist. Die Heizung soll auch schnell und exakt reproduzierbar regelbar sein, so daß ein aus einer Vielzahl von Heizstrahlern bestehendes Heizfeld bei einzeln ansteuerbaren Heizstrahlern ein exakt auf die Erfordernisse abgestimmtes Temperaturfeld zur Folge hat, so daß die Plastifizierung der jeweiligen Kunststoffplatte bzw. -folie nach einem bestimmten, für die spätere Verformung der Platte unter Vakuum optimalen Muster erfolgen kann.

Diese Aufgabe ist erfindungsgemäß durch die Verwendung von kurzwelligen Infrarotstrahlern als Heizstrahler gelöst, wobei das Emissions- bzw. Abstrahlungsmaximum im Bereich einer Wellenlänge λ < 2 µm liegt. Nach einem weiteren Merkmal der Erfindung sind die Heizstrahler als Halogenlampen ausgebildet, deren Wendel aufgrund der dem Schutzgas innewohnenden Eigenschaften mit höheren Temperaturen betrieben werden kann. Zweckmäßigerweise sind Halogenlampen länglicher Ausbildung vorgesehen, die sowohl in Längen- als auch in Breitenrichtung nahe aneinander nebeneinanderliegend angeordnet sind, so daß ein Heizfeld mit einzeln ansteuerbaren Heizstrahlern gebildet ist. Möglich ist auch, diese Heizstrahler punktförmig unter Bildung eines entsprechend fein gerasterten Heizfeldes zu gestalten. Wesentlich ist, daß als Heizstrahler Infrarotstrahler verwendet werden, deren Abstrahlungsmaximum unter einer Wellenlänge von 2 µm liegt.

Durch die Verwendung derartiger Strahler, die in anderen Industriebereichen zur Trocknung eingesetzt werden, bei Heizungen für Vakuumformmaschinen ergibt sich ein doppelter Nutzeffekt. Aufgrund der äußerst trägheitsarmen Konstruktion ist ein Vorheizen nicht erforderlich. Die Zeitkonstante eines solchen Strahlers liegt bei ca. 0,2 Sekunden. Regelvorgänge sind schnellstens abgeschlossen und ein Nachheizen des Strahlers ist praktisch vernachlässigbar. Somit können Vakuumformmaschinen mit derartig ausgebildeten Heizungen rationell eingesetzt werden. Darüber hinaus wird auch die Kühlzeit des Thermoformprozesses aufgrund der geringen Restwärme reduziert. Der zweite wesentliche Vorteil liegt in der Eindringtiefe der Strahlung. Alle Thermoplasten werden für kurzwelliges Infrarot transparenter als für langwelliges und mittelwelliges Infrarot. Damit ist die Eindringtiefe in der Oberfläche des Thermoplasten größer. Folglich können höhere Energiedichten eingebracht werden, ohne daß es zu einem Aufschmelzen oder Verbrennen der Oberflächenschicht kommt. Das Material kann schneller aufgeheizt und/oder besser durchgeheizt werden. Der Temperaturgradient zwischen Randschicht und Mitte einer Kuststoffplatte wird geringer. Das Schutzgas des als Halogenlampe ausgebildeten Infrarotstrahlers erlaubt, diese Lampen mit höheren Temperaturen zu betreiben, so daß das Abstrahlungsmaximum in den Bereich von 1 µm Wellenlänge verschoben wird mit den obengenannten Vorteilen bei der Plastifizierung von thermoplastischen Kunststoffplatten bzw. -folien.

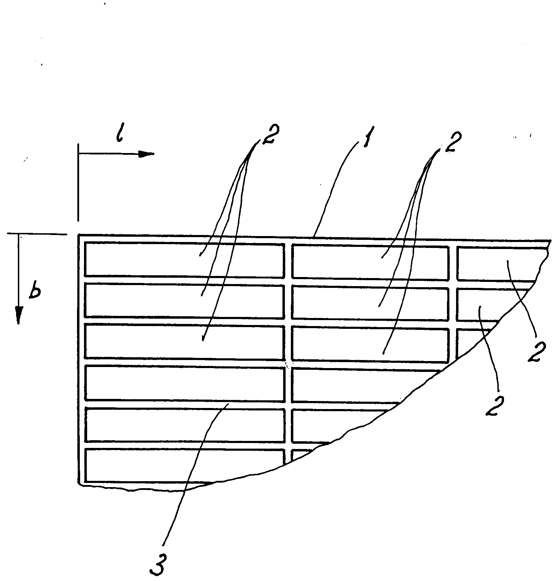

Die Erfindung wird nun anhand eines Ausführungsbeispiels im Zusammenhang mit der einzigen Figur der Zeichnung näher beschrieben, die in abgebrochener Darstellung die Draufsicht auf eine Unter- bzw. Oberheizung einer Vakuumformmaschine zeigt.

Die in der Figur gezeigte Heizung für Vakuumformmaschinen weist ein Gehäuse bzw. eine Trägerkonstruktion 1 auf, die eine Vielzahl von Heizstrahlern 2 aufnimmt. Die Heizstrahler 2 sind länglich ausgebildet und sowohl in Breitenrichtung b als auch in Längsrichtung 1 nahe beieinanderliegend bzw. nebeneinanderliegend angeordnet, so daß ein Heizfeld 3 gebildet wird. Jeder der Heizstrahler 2 ist einzeln ansteuerbar, so daß ein bestimmtes, auf den individuellen Einzelfall abgestimmtes Temperaturfeld aufgebaut werden kann und die Plastifizierung der (nicht gezeigten) Kunststoffplatten in ganz bestimmter Weise vorgenommen werden kann.

Bei den Heizstrahlern 2 handelt es sich um kurzwellige Infrarotstrahler, deren Emissionsmaximum bei einer Wellenlänge λ < 2 µm liegt. Hierbei finden Halogenlampen Verwendung, deren Intensität und Farbtemperatur über ihre gesamte Lebensdauer konstant bleiben. Die Wendel kann mit hohen Temperaturen betrieben werden. Die Eindringtiefe der kurzwelligen Strahlung in die Oberfläche der zu beheizenden Thermoplastplatten ist wesentlich höher als bei herkömmlichen Strahlern, so daß auch Platten mit größerer Dicke, beispielsweise mit einer Dicke von etwa 10 mm, schnell und homogen plastifiziert werden können.

Statt der länglich ausgebildeten Strahler 2 können auch punktförmig gestaltete Heizstrahler eingesetzt werden, so daß ein noch feineres Raster mit entsprechend feiner Abstimmung des Temperaturfeldes erhalten wird.

## Patentansprüche

1. Verwendung von kurzwelligen Infrarotstrahlern mit einem Abstrahlungsmaximum im Bereich der Wellenlängen λ < 2 µm als Heizstrahler für die Unter- und/oder Oberheizung einer Vakuumformmaschine zum Plastifizieren der zu verformenden thermoplastischen Kunststoffplatten bzw. -folien.

2. Heizstrahler zur Verwendung nach Anspruch 1, dadurch gekennzeichnet, daß er als Halogenlampe ausgebildet ist.

3. Heizstrahler nach Anspruch 2, dadurch gekennzeichnet, daß die Halogenlampen länglich gestaltet und unter Bildung eines Heizfeldes (3) in beiden Richtungen (Breitenrichtung b, Längsrichtung l) dicht nebeneinanderliegend angeordnet sind.

4. Heizstrahler nach Anspruch 2, dadurch gekennzeichnet, daß die Halogenlampen punktförmig gestaltet und nahe beieinanderliegend nebeneinander unter Bildung eines Heizfeldes (3) angeordnet sind.
